# EUROPEAN PATENT APPLICATION

(11) **EP 1 092 479 A1**
(43) Date of publication of application: **18.04.2001**
(21) Application number: 00308699.8
(22) Date of filing: 03.10.2000
(51) Int. Cl.: B05D 1/38

(54) **Multiple layered coating on heat-sensitive substrates**

(30) Priority: 15.10.1999 US 419331
(71) Applicant: ROHM AND HAAS COMPANY, Philadelphia, Pennsylvania 19106-2399 (US)
(72) Inventor: White, Gerald K., Lake Forrest, Illinois 60045 (US); Nacker, Wayne E., Norcross, Georgia 30092 (US); Allen, Karen D., Lockport, Illinois 60441 (US)
(74) Representative: Buckley, Guy Julian

(57) **Abstract**

A heat-sensitive substrate is coated with a first, low-temperature curing coating powder and a second, high-temperature curing coating powder. The time/temperature conditions of fusing and curing the low-temperature coating powder permit the substrate to retain its character and thus suffer no essential damage to the character of the substrate. The time/temperature conditions of fusing and curing the high-temperature coating powder would so damage the substrate if the high temperature curing coating powder were applied, fused, and cured, directly on the substrate. However, the coating provided by the low-temperature curing powder protects the substrate from detriment when the high-temperature curing coating powder is fused and cured thereon.

## Description

The present invention is directed to coating heat-sensitive substrates with at least two coating layers, including a first coating formed from a low-temperature curing coating powder to initially coat the heat-sensitive substrate and provide a protective thermal and moisture barrier layer, and a second coating layer formed from a high-temperature curing coating powder, the second coating layer providing a desired appearance and/or other desired property. The second coating powder requires a degree of heating for fusing and curing which would, if directly applied to the substrate, in some manner damage the substrate by altering the essentials characteristics of the substrate. The first coating powder, on the other hand, may be applied, fused, and cured directly onto the heat-sensitive substrate without so damaging the substrate. With the first coating in place and providing thermal insulation, the second coating powder may be applied, fused, and cured without such damage to the underlying substrate.

### Background of the Invention:

A variety of coating powders have been developed which produce coatings with a variety of appearance effects. U.S. Patents Nos 4,341,819, 5,688,878, and 5,932,288 describe epoxy-based coating powders which produce wrinkled finishes. U.S. Patent No. 5,695,852 describes a polyester-based coating powder which produces a wrinkle finish. U.S. Patent No. 5,212,263 describes an epoxy-based coating powder which produces a textured coating powder. U.S. Patent No. 5,684,067 describes a low gloss polyester/triglycidyl isocyanurate coating powder which produces a low gloss coating. U.S. Patent No. 5,187,220 describes a metal flake-containing coating powder. U.S. Patent No. 5,368,885 describes a glass flake-containing coating powder.

Coating powders are generally formulated to provide certain properties in addition to appearance. For example, chip and mar-resistance, weatherability, impact properties, hardness, corrosion resistance, etc. may be desired properties in a coating produced from coating powder. U.S. Patent No. 5,563,200 describes silicone-resin containing coating powders. Silicone-containing coating powders are primarily designed to withstand high temperatures, but they also provide flame-retardant characteristics.

All of the above-identified patents, the teachings of each of which is incorporated herein by reference, are directed to coatings primarily useful for coating traditional (non-heat-sensitive) substrates, particularly metal substrates. As a consequence the time/temperature condition required for curing such powders had not been used for temperature-sensitive substrates because of damage to such substrates during curing. This invention provides a solution to this long-standing problem in the art.

A good deal of recent effort has gone into developing low temperature curing coating powders for coating heat-sensitive substrates, such as certain plastics, thin metal foils, and particularly wood and wood products, such as fiberboard and paper. A substrate may be heat-sensitive because it melts, chars, weakens or decomposes at temperatures at which conventional coating powders fuse and cure. Also, moisture-containing substrates, such as wood, require low temperature curing coating powders to prevent outgassing that causes defects. U.S. Patent Nos. 5,714,206 and 5,907,020 describe two-component epoxy coatings suitable for coating heat-sensitive substrates. U.S. Patent No. 5,731,043 describes a triboelectric process for coating heat-sensitive substrates. U.S. Patent No. 5,922,473 describes a coating powder for heat sensitive substrates having a dual UV/thermal cure mechanism. U.S. Patent Application Nos. 09/111,419 filed 7 July 1998 and U.S. Patent application 09/307,541 filed 7 May 1999 each describe one-component epoxy resin-based coating powders for heat-sensitive substrates. The teachings or each of these patents and applications are incorporated herein by reference. However, such low temperature powder do not provide the variety of desirable decorative or other desired properties of the higher curing powders mentioned above.

A primary advantage object of providing a coating powder for a heat-sensitive substrate is that the coating powder cures at a low temperature. Beyond that, it is desirable that various appearance effects be achieved, such as those mentioned above with respect to coating powders for conventional substrates, e.g., textured, wrinkled, degree of gloss, patterned, veined, marbled, etc.

While a number of appearance effects have been achieved in low temperature curing coating powders, e.g., U.S. Patent No. 5,721,025, the teachings of which are incorporated herein by reference, which teaches a textured epoxy coating composition for wood substrates, as yet the variety of appearance effects achievable with low temperature curing coating powders is limited relative to the variety of appearance effects achievable with coating powders for traditional substrates. Such coating powders, however, generally involve fusing and curing conditions of temperature time which would damage the heat-sensitive substrate if coated directly thereon. The present invention is directed to using coating powders formulated for conventional substrates, such as metal, on heat-sensitive substrates, such as wood, engineered wood, fiberboard, paper, card board, wall board, fiber glass, particle board, glass, ceramics, plastic, thin metal foils, etc.

### Summary of the Invention:

In accordance with the invention, a heat sensitive substrate is coated with a first coating powder formulated for fusing and curing on a heat-sensitive substrate and subsequently coated with a second coating powder which fuses and cures at a higher temperature. The first coating provides a thermal and/or moisture barrier permitting fusing and curing of the second coating powder at harsher time/temperature conditions which, if the second coating powder were directly fused and cured on the substrate, would be damage in some essential manner to the substrate. The first coating powder may be fused and cured or partially fused and cured prior to application of the second coating powder and the second coating powder then fused and cured. Or two layers of coating powder may be applied in a "dry on dry" process and the two layers fused and cured using an external heating source, such as an IR lamp, which heats the outer layer to a greater temperature than it heats the low temperature curing inner layer.

In one embodiment of the invention, the inner layer is a dual cure coating powder, such as that described in above-referenced U.S. Patent No. 5,922,473, having both a UV and a thermal curing mechanism. After application of the inner layer of coating powder, the coating powder may be heated sufficiently to fuse, but not cure the inner layer, and exposed to UV light to effect a partial cure. Subsequently, the outer layer of coating powder is applied and the coated substrate is heated to effect fusing and curing of the outer layer and effect a full thermal cure of the inner layer. Tackiness of a partially cured inner layer may promote adhesion of the subsequently applied second coating powder. Furthermore, if, as may be preferred, the chemistries of the two layers are similar, e.g., both are epoxy-based, cross-linking may occur between the resins of the two layers, thereby assuring enhanced bonding between the two coating layers that are formed.

In accordance with a particular aspect of the invention, the coating powder for the inner coating layer may contain a blowing agent to foam the inner layer, whereby thermal insulation provided by the inner coating layer is enhanced. Typically, the amount of blowing (or foaming) agent is sufficient to reduce the density of the inner layer by at least 25 % relative to the density the same composition would produce without blowing agent. Because the outer layer is primarily relied upon to provide the desired appearance, appearance defects, such as pinholes, which are expected in a blown coating powder, are masked by the outer coating.

### Detailed Description of Certain Preferred Embodiments:

It is believed that the most common use of the invention will be to provide a two-layer structure, an inner layer formed from a first coating powder which fuses and cures at relatively mild time/temperature conditions and an outer layer formed from a second coating powder which fuses and cures at relatively harsher time/temperature conditions. However, the invention is not intended to be limited to a two-layer coating, and three or may layers may be coated on a substrate in accordance with the invention. Accordingly, when the terms "inner coating" and "outer coating" are used herein, it is to be understood that additional coating layers may be applied over the "outer coating" or even between the "inner coating" and the "outer coating". For example, a first inner coating may be applied directly to the substrate to provide a thermal and moisture barrier; a second coating may be applied to give a specific appearance effect; and a third clear coat may be applied to enhance and give depth to the appearance effect of the second coating.

When it is stated herein that a coating is based on a certain resin, e.g., "epoxy resin-based" or "polyester resin-based", it is meant that at least 50 wt% of the resin of the coating powder, including any cross-linking agent, is that resin.

The particular utility of the method of this invention is in the coating of heat sensitive substrates such as plastics, paper, glass, fiberboard, particle board, ceramics, cardboard, engineered wood, paper, and wood. For the purposes of this invention, wood is defined as any lignocellulosic material whether it comes from trees or other plants and whether it be in its natural form, milled, or made into plywood, particle board, engineered, or fiberboard of various densities. It is exemplified by lumber, panels, molding, siding, oriented strand board, hardboard, and medium density fiberboard (MDF). The particle board may be standard or treated to enhance its electrical conductivity. Wood having a moisture content generally on the order of about 3 to 10 % by weight is suitable for the purposes of this invention. A porous particle board, pre-coated with a conductive liquid coating composition and cured, may also serve as a suitable substrate for the coating powder of this invention.

While metals are generally not heat-sensitive, very thin metals, e.g., thin metal foils, may weaken or disintegrate if exposed to high temperatures. The method of the invention is applicable to coating such thin metals.

The invention is primarily directed to the use of curable coating powders, generally heat-curable coating powders but also coating powders which are cured wholly or partially by UV light. Curable coating powders, due to the cross-linked structure of the cured coating, provide the most permanent coatings. The invention is generally not required for thermoplastic coating powders because thermoplastic coating powders are available which fuse at a variety of temperatures, including the low temperatures required for heat-sensitive substrates. However, thermoplastic materials that cure at relating harsh conditions are within the scope of the invention as useful for a second or outer coating.

The terms "low-temperature curing coating powder" and "high-temperature curing coating powder" are used herein in a somewhat relative sense. The low-temperature coating powder is one which can be applied, fused, and cured on the heat-sensitive substrate of choice without damage to the substrate. By "no damage to the substrate" is meant herein no damage to substrate characteristics that would commercially detract from the product. Such damage includes delamination, cracking, loss of strength, brittleness. Typically, low-temperature coating powders useful in accordance with the invention flow at about 225°F (107°C) or below, become active at about 250°F (121°C) or below, and cure within 5 minutes at about 300°F (149°C) or below. Curing is, of course, both time and temperature dependent, and time/temperature conditions of a low-temperature curing coating powder will be adjusted to the requirements of the particular substrate.

Certain specific low temperature curing coating powders useful in the present invention are worthy of note. U.S. Patent No. 5,907,020, the teachings of which are incorporated herein by reference, teaches a thermosetting powder coating system in which competing reactions are taking place simultaneously. The reactions are (A) a catalyzed self-curing of a portion of an epoxy resin present in an extruded mixture of the resin and a catalyst, and (B) a crosslinking reaction between another portion of the extruded resin and a low temperature curing agent. The extruded mixture and the low temperature curing agent are each in powder form and the two powders are blended to form a coating powder. The preferred curing agent is an epoxy resin adduct of an aliphatic polyamine having a primary amino group. The preferred catalyst is an epoxy adduct of an imidazole.

U.S. Patent No. 5,922,473, the teachings of which are incorporated by reference, describes a coating powder having both a UV cure and a thermal cure. The dual thermal and radiation curable powder coating composition is a composition in particulate form that consists essentially of a melt blend of: a) an ethylenically unsaturated base resin selected from unsaturated polyesters, unsaturated polyacrylates, unsaturated polymethacrylates, and mixtures thereof; b) a second resin co-polymerizable with said base resin having an ethylenically unsaturated functional group selected from vinyl ether, acrylate, methacrylate, and allyl ester groups, and mixtures thereof; c) a photoinitiator effective to enable radiation curing of the ethylenically unsaturated resins a) and b); and, d) a thermal initiator effective to enable thermal curing of the ethylenically unsaturated resins a) and b) while not causing substantial curing during melt blending, such that said composition is capable of being effectively flowed out, as it is melted for curing, at low flow temperatures at or below about 250°F and is capable of being effectively cured, both on the surface and through, using heat and either ultraviolet or electron beam radiation.

U.S. Patent Application No. 08/964,242, filed 4 November 1997 the teachings of which are incorporated herein by reference, teaches a one-component, low temperature coating powder. The coating powder is an epoxy resin coating powder which cures at temperatures ranging from 225 to 300°F. The epoxy resin has a melt viscosity of from about 200 to about 2000 centipoise at 150°C and a low temperature curing agent which is solid at about 80°F (27°C). The preferred curing agent is an epoxy resin adduct of an aliphatic polyamine, preferably containing a primary amino group.

U.S. Patent Application No. 09/136,184, filed 19 August 1998, teaches a non-hazing UV curable powder coating composition which comprises a film-forming particulate blend of A) an unsaturated base resin: B) an unsaturated cross linker resin co-polymerizable with the base resin; and C) a photoinitiator, wherein the combination of components A) plus B) comprises a blend of a crystalline resin and a non-crystalline resin, and wherein the composition further comprises D) a recrystallization inhibitor comprising another crystalline resin that reduces or eliminates hazing in the cured coating formed from the powder composition. Though the cure mechanism in this coating is UV, not thermal, the composition flows at a low temperature suitable for heat-sensitive substrates.

Generally, the higher temperature coating powder will have a 5-minute cure at least about 50°F (28°C) higher than the 5-minute cure temperature of the low-temperature curing powder. While the 5-minute cure temperature gap may be narrower than this, there becomes less of an incentive to provide a dual coating when the gap is narrow, such as when the 5-minute cure temperature differential is down to about 25°F (14°C) or below.

Because cure is a function of both time and temperature, although coating powders are referred to herein as "low-temperature curing" and "high-temperature curing" it is not a requirement of the invention that the low-temperature coating powder actually be fused and cured at a lower temperature than the high-temperature coating powder. Rather, the low-temperature coating powder forms a cured coating at a relatively mild combination of time and temperature parameters which do not harm the substrate. The second, or high-temperature coating powder forms a coating at a relatively harsher combination of time and temperature parameters which, if the second coating powder were applied directly to the substrate, would harm the substrate. Thus, for example, a first coating powder applied and then fused and cured at 350°F (177°C) for 5 minutes may not harm an underlying substrate and may protect the substrate while a second substrate is applied and then fused and cured at the same temperature for 20 minutes.

The 5-minute cure temperature differential between the low-temperature coating powder and the high-temperature coating powder may be substantial, with the understanding that the inner coating must protect the substrate during the fusing and curing of the high-temperature substrate. Typically, the 5-minute cure temperature gap will not be greater than about 200°F (111°C); more typically not greater than 100°F (56°C). In any case, the inner coating must provide sufficient insulation such that the underlying substrate is not damaged, e.g., melted, degraded, charred, etc., during fusing and curing of the higher temperature coating powder. The degree of thermal insulating capacity required of the inner coating will depend upon the relative harshness of the fusing and curing conditions required for the high temperature coating powder. The degree of thermal insulation provided by the inner coating will depend upon a number of factors, such as the composition of the inner coating, including both resin and fillers; the thickness of the inner coating; whether the inner coating is foamed or not, a foamed coating providing enhanced insulation; and the manner in which heat is applied to fuse and cure the high-temperature coating powder. Generally, the inner coating will have to be at least 1 mil thick to provide meaningful insulation, preferably at least about 2 mils thick. If the fusing and curing conditions for the high-temperature coating powder are particularly severe, even thicker inner coatings may be required, i.e., up to 10 mils. From a cost perspective, the inner coating is generally no thicker than is required to assure adequate thermal insulation, taking into account normal fluctuations in coating conditions. The outer coating which provides the appearance or other desired effects will generally be between about 1 and about 10 mils, more typically between about 2 and about 6 mils.

It is considered within the skill of the art to select a low-temperature coating powder, and to produce therefrom an inner coating of adequate thermal insulating capacity to protect the substrate during fusing and curing of the high-temperature coating powder.

In addition to providing a thermal barrier for application or the outer coating, the inner coating also provides a barrier against volatiles, such as water vapor, from reaching the coating powder that forms the outer layer during fusing and curing of such outer layer.

For best adhesion between the layers, it is believed that the chemistries of the resins of the coating powders which form the inner layer and the outer layer should be similar. For example, it is may be desirable to use an epoxy-based first coating layer with an epoxy-based second layer, etc. This may be true even if the inner layer is fully fused and cured prior to application of the outer layer coating powder. If the outer layer coating powder is applied over inner layer coating powder which is either uncured or fused and partially cured, similarity in chemistries may result in more permanent bonding of the coating layers which form through cross-linking between resins of the two types of coating powder.

There may be substantial appearance differences between the coating powders used to form the inner layer and outer layers. As the outer layer is generally relied upon for appearance, the appearance of the inner coating may be substantially different than that of the outer coating. An advantage of the method of the present invention is that defects in the inner coating, which may be caused, for example, by outgassing, are covered up or masked by the outer coating.

The invention provides that the variety of appearances and/or other properties already available from coating powders for non-heat-sensitive substrates, such a metals, are now available for heat-sensitive substrates. Appearance effects include those in the above-referenced patents, including wrinkled; textured; gloss-control; metal flake-containing (metallic or mirror finish), depending upon flake size and use level; glass flake-containing (sparkle finish); etc. Physical properties include flame-resistance, chip and mar-resistance, weatherability, impact resistance, hardness, corrosion resistance, etc.

The inner coating may contribute to overall appearance in some cases. For example an opaque inner coating may be formed and then a clear or translucent outer coating applied.

In a simple form, the low temperature curing coating powder may be applied, e.g., electrostatically, to a substrate, fused, and fully cured. Then the higher temperature curing coating powder is applied, e.g., electrostatically, and the coating powder heated to fuse and cure the same.

Alternatively, the inner layer coating powder may be applied and heated sufficiently to fuse this coating powder to form a continuous layer, but before the inner layer fully cures, the outer layer coating powder is applied, and additional heat applied to fuse and cure the outer layer coating powder and fully cure the inner layer. Because the inner layer is not fully cured when the second coating is applied, it may tend to be tacky, and, if tacky, may enhance initial adhesion between the fused, but un-cured inner layer and the freshly deposited second coating powder.

In one variation of this invention, the inner layer is a dual cure formulation, having both a UV-cure mechanism and a thermal cure mechanism. The coating powder for the inner layer is applied and enough heat is applied to fuse, but not thermally cure the inner layer. Then the inner layer is exposed to U.V. light to effect the UV-cure of the inner layer. The inner layer, which is not yet thermally cured, may be tacky when the coating powder for the outer layer is applied. Then thermal cure of both layers is effected by external heat.

Typically, coating powders are cured by application of heat from an external source, such as an IR heat lamp. When heat is applied from such a heat source to two coating powder layers, heating begins at the outer layer and transfers inward. As the outer layer is always hotter than the inner layer, simultaneous curing of both a higher temperature curing outer layer and a low temperature curing inner layer may be achieved by application of external heat. So as to be able to simultaneously cure both the inner layer and outer layer without damaging the heat-sensitive substrate, the 5-minute cure temperature of the outer coating powder is typically not be more than about 100°F (55°C) above that of the 5-minute cure temperature of the inner coating powder, more typically not more than about 75°F (34°C) above that of the 5-minute cure temperature of the inner coating powder..

A further variation of the invention is to apply the two coating powders in a "dry on dry" process in which the inner coating powder is applied, e.g., electrostatically, and then the outer coating powder is applied, e.g., electrostatically, over the un-fused, un-cured coating powder. The two layers are then fused and cured simultaneously by application of external heat. Again, the outer layer coating powder is heated first and to a greater extent than the inner layer coating powder.

When additional thermal insulation is desired of the inner layer, the inner layer coating powder may contain a blowing or foaming agent. If a foaming agent is used, it may be either admixed in dry form with the coating powder, whereupon it tends to coat the surfaces of the coating powder particles, or (preferably) is integrally incorporated in the coating powder itself. If integrally mixed, the foaming agent must be activated at a temperature above that at which the coating powder composition is fused into a coating powder, but at or below the temperature at which the coating powder is fused and cured to coat the heat-sensitive substrate. Typically, foaming agent is used at between about 0.1 and about 5 phr, preferably at least about 0.5 phr, the actual amount depending upon the particular foaming agent, the particular resin system, the processing conditions and the degree to which density reduction is desired. Depending upon the amount of ingredients in addition to the resin, the foaming agent is used at between about 0.1 and about 3 wt% of the entire formulation, preferably at least about 0.3 wt%.

A blowing or foaming agent to be incorporated in a coating powder must be selected so as not to foam during the heat fusion of the materials to form the coating powder, typically at a temperature of between about 180°F and about 240°F (82-116°C), but produce significant gas for foaming at the fusion/curing temperature of the coating powder. A currently preferred heat-activated foaming agent is p-toluene sulfonyl hydrazide, such as that sold as Celogen® TSH sold by Uniroyal Chemical Company. Other suitable blowing agents include, but are not limited to 2,2'-azobisisobutyro nitrile, dinitrosopentamethylenetetramine, sodium bicarbonate, ammonium carbonate, silicon oxyhydride and azocarbonamide.

Chemical foaming agents such as sodium borohydride might also be used to produce foaming. To foam, sodium borohydride requires a proton donor, such as water. U.S. Patent No. 4,491,554, the teachings of which are incorporated herein by reference, describes the use in plastics of salt hydrates, such as alumina trihydrate, in conjunction with alkali metal borohydrides to produce foaming at elevated temperature, the salt hydrate only releasing water above a certain threshold temperature.

To meaningfully add to the thermal insulating properties of the inner coating, the amount of foaming agent used should be sufficient to reduce, upon activation, the density of the inner layer by at least about 25 % relative to the density of the coating which would be produced without the foaming agent. Too much foaming, on the other hand, will result in a mechanically weak inner coating.

The Invention will now be described in greater detail by way of specific examples.

### Example 1

### Preparation of and Coating With a Single Component, Low-Temperature, Epoxy Coating Powder

A coating powder is formulated as follows (in parts per hundred by weight resin (phr)):

| | | |
|---|---|---|
| GT-7071 | 85 | Epoxy resin, Tg 38°C, viscosity 500 cps at 150°C |
| LMB-5218 | 15 | Epoxy/polyamine curing agent |
| Epon P-101 | 2.0 | Epoxy/imidazole cure catalyst |
| TiO₂ | 30.0 | |
| Antioxidant | 1.0 | sodium hypophosphite |
| Surfynol® 104S | 1.0 | |
| Modaflow® 2000 | 1.0 | |
| Uvitex® OB | 0.1 | |

The components is melt compounded in a twin screw extruder. The extrudate is cooled between water-cooled rollers, is broken into chips, and then is ground into a powder. Powder passing through a 200 mesh screen is electrostatically coated on several panels of cold medium density fiberboard panels and is cured at 300°F for five minutes to obtain a cured coating having a film thickness of 2-3 mils.

### Example 2

### Preparation of and Coating With a Two-Component, Low-Temperature, Epoxy Coating Powder

A two-part powder coating composition is formulated including as part (A) an epoxy resin with catalyst & pigment component and as part (B) a pigment and curing agent component (in phr based on epoxy resin.

| Part A Components | Parts |
|---|---|
| Crystalline Epoxy RSS 1407 | 100 |
| Imidazole Adduct P-101 | 2 |
| Acrylate Flow Acid | 1.4 |
| Benzoin | 0.8 |
| Pigments | 0.079 |
| TiO₂ R-902 | 60 |

| Part B Components | |
|---|---|
| Acrylate Flow Acid | 1.4 |
| Benzoin | 0.8 |
| Pigments | 0.079 |
| TiO₂ R-902 | 60 |
| Amine Adduct LMB-5218 | 100 |

The two parts are homogeneously mixed an applied to several cold medium density fiberboard panels and are cured at 225°F (107°C) for 10 minutes to obtain 1.8-2.2 mil thick films.

### Example 3

### Application of a Wrinkled, High Temperature Coating Powder Over the Coated Panels of Examples 1 and 2

A coating powder is prepared in accordance with this invention by initially blending the following ingredients:

| | Material | Phr |
|---|---|---|
| 1. | Epoxy low viscosity-type 3 (Dow XD-9046) | 85 |
| 2. | Epoxy type 3 with 5% polyalkylacrylate flow promoter (Shell DRH-203) | 15 |
| 3. | Methylene Disalicylic Acid (Tenneco) | 18 |
| 4. | Sparmite® (BaSO₄) filler | 50 |
| 5. | Carbon black filler 3 (City Service Raven #22) | |
| 6. | BCl₃ amine catalyst (Ciba Geigy XU-213) | 0.5 |

The above materials are melt-mixed in an extruder and the extrudate chopped and ground to a fine powder that is passed through a 60 mesh (U.S. Standard).

The coating powder is applied cold to the coated panels of Example 1 and Example 2. The coated powder is exposed to an IR heat lamp which heats the powder to 375°F (190°C) for 10 minutes to heat and fuse the coating. A wrinkled finish, approximately 2 mils average thickness, is produced on each panel without damage to the underlying substrate. The continuous, defect-free coating indicates that the essential properties of the underlying substrate is not impaired.

### Example 4

### Applying a Mirror-Like Coating to the Coated Panels of Examples 1 and 2

A process is performed embedding aluminum flake in a coating powder resin. The process is performed in a Littleford blender, a medium intensity mixer having a tip speed of 4.02 meters/second (158 inches per second) and having a power ratio of 1 HP/2-4 lbs of product mixed. The mixer is jacketed to provide heating and cooling water and is connected to a source of nitrogen to maintain an inert atmosphere within the mixer.

The thermosetting resin coating powder is a thermosetting polyester-based coating powder sold by Morton International, Inc., having particulates in the range of 30 microns. The aluminum flake is leafing aluminum with flakes having a largest dimension of 3 microns. Aluminum flake is used at 3 wt% relative to the coating powder

The coating powder is charged into the mixer and nitrogen caused to flow therethrough. The jacket temperature is brought up to 60°C and the material is brought up to 41°C. At this time the blades are activated until the temperature reaches 50°C. The blades are stopped and the aluminum flake is added. Mixing continues for 30 minutes with the material reaching a final temperature of 60°C. At this time, mixing is stopped and cooling water is introduced into the jacket to bring the material down to ambient temperature. The resulting powders are then used to coat the coated panels of Example 1 and Example 2. The powder is electrostatically applied to the panels cold, and the panels are exposed to an IR heat lamp so as to heat the coating to 400°F (205°C) for 20 minutes, thereby fusing and curing the coating. A mirror-like finish is produced on each panel with an average thickness of about 2 mils. The continuous, defect-free coating indicates that the essential properties of the underlying substrate is not impaired.

It should be noted that if less aluminum flake is used, the finish would appear more metallic than mirror-like.

### Example 5

### Applying a Polyester Wrinkle Finish Coating to the Coated Panels of Examples 1 and 2

A coating powder is prepared in accordance with this invention by initially blending tetra (methoxymethyl) glycoluril with the polyester resin and other ingredients identified in the table below at high speed. The blend is then melt-mixed in a Buss extruder whose front zone is maintained at 180° F (82°C). and whose rear zone was unheated. The extrudate is then chipped and ground with 0.2% by weight of colloidal alumina (Degussa) to a fine powder that passes through a 60 mesh screen (U.S. Standard). The HPMF and gel time are given in the table.

**TABLE I**

| Component | Phr |
|---|---|
| Hydroxyl Polyester AN745* | 94 |
| Tetramethoxymethyl | 6 |
| Glycoluril Cyclamic Acid** | 0.35 |
| Acrylic Oligomer Flow Control Agent | 1.5 |
| Benzoin | 1.0 |
| Carbon Black | 3.5 |
| Calcium Carbonate | 60 |
| HPMF @ 375°F, .75 gm (mm) | 51 |
| Gel Time @ 400° F. (sec) | 225 |

| | |
|---|---|
| *AN 745 is sold by Hoechst Celanese | |
| **Cyclamic acid is a product of Abbott Laboratories | |

The coating powder is applied to cold coated panels of Example 1 and Example 2. Then the powder is exposed to IR lamps which heat the powder to 400°F (205°C) for 15 minutes. A polyester wrinkle finish about 2 mils thick results. The continuous, defect-free coating indicates that the essential properties of the underlying substrate is not impaired.

### Example 6

### Applying a Textured Coating over the Coated Panels of Examples 1 and 2

A coating powder is formulated as follows:

| Component | Phr |
|---|---|
| Epoxy low viscosity-type 3 (Dow XD-9046) | 85 |
| Epoxy type 3 with 5% polyalkylacrylate flow promoter (Shell DRH-203) | 15 |
| Methylene Disalicylic Acid (Tenneco) | 18 |
| Sparmite® BaSO₄ filler | 50 |
| Carbon black filler (City Service Raven #22) | 3 |
| BCl₃ amine catalyst (Ciba Geigy XU-213) | 0.5 |

The above materials are melt-blended in an extruder and the extrudate chopped and ground to a fine powder that is passed through a 60 mesh screen (U.S. Standard).

The coating powder is electrostatically applied to cold coated panels of Examples 1 and 2. Using an IR heat lamp, the powder is fused and cured at 375°F (190°C) for 10 minutes. A textured coating having an average thickness of 2 mils in produced on each panel. The continuous, defect-free coating indicates that the essential properties of the underlying substrate is not impaired.

### Example 7

### Coating the Panels of Examples 1 and 2 with a Sparkle or Glitter Finish

A clear polyester coating powder sold as Corvel® 23-9030 by Morton International is bag blended with glass flakes at a 10:1 coating powder to flake ratio. This blend is electrostatically applied to cold, coated panels of Examples 1 and 2. Using an IR lamp, the blend is heated to 400°F (204°C) for 10 minutes. Coatings having a sparkle or glitter appearance are produced on each board. The continuous, defect-free coating indicates that the essential properties of the underlying substrate is not impaired.

### Examples 9 - 10

### UV Curable Unsaturated Polyester Powder Coatings as First Coating

The following ingredients are blended and extruded together in the manner given to produce UV curable powder coatings.

| **INGREDIENTS** | **PHR** | |
|---|---|---|
| | **EXAMPLE 9** | **EXAMPLE 10** |
| DRY BLEND UNTIL HOMOGENEOUS | | |
| Uralac XP-3125¹ (Non-Crystalline) | 80 | 80 |
| Uralac ZW-3307P² (Crystalline) | 20 | 20 |
| Epon RSS-1407³ (Crystalline) | 5 | --- |
| Ciba RD 97-275⁴ (Crystalline) | --- | 5 |
| Lucerin TPO⁵ | 2 | 2 |
| Resiflow P-67⁶ | 2 | 2 |
| Shepard Black⁷ | 6 | 6 |
| CHARGE TO EXTRUDER AND EXTRUDE AT MELT TEMPERATURE OF | | |
| AIR COOL EXTRUDATE AND BREAK INTO CHIPS AND THEN ADD | | |
| Aluminum Oxide C⁸ | 0.2% | 0.2% |
| CHARGE TO MILL AND GRIND TO POWDER | | |
| SCREEN TO -140 MESH | | |

| | | |
|---|---|---|
| Table Footnotes ¹Uralac XP 3125 is a solid, amorphous, unsaturated polyester resin that is believed to be based on fumaric or maleic acid, terephthalic acid, and 1,6-hexanediol, sold by DSM Resins. The resin individually has a Tg of about 125°F. | | |
| ²Uralac ZW-3307P is a solid, crystalline, divinyl ether urethane crosslinker resin that is believed to be based on hexamethylene diisocyanate and 4-hydroxybutyl vinyl ether, sold by DSM Resins. The resin individually has a Tm of about 223°F and a recrystallization point of about 176°F. | | |
| ³Epon RSS-1407 is a crystalline epoxy resin composed of tetramethyl bisphenol diglycidyl ether, sold by Shell Chemical. The resin individually has a Tm of about 221°F. | | |
| ⁴Ciba RD 97-275 is a crystalline epoxy resin composed of bisphenol S diglycidyl ether, sold by Ciba Polymers. The resin individually has a Tm of about 257°F. | | |
| ⁵Lucerin TPO is a solid photoinitiator composed of diphenyl (2,4,6-trimethyl-benzoyl) phosphine oxide, sold by BASF. | | |
| ⁶Resiflow P-67 is a solid acrylic flow control agent, sold by Estron Chemical. | | |
| ⁷Shepard Black is a black spinel copper chromite pigment, sold by Shepard Color. | | |
| ⁸Aluminum Oxide C is a dry flow additive composed of aluminum oxide, sold by Degussa. | | |

Each powder formulation above is electrostatically applied by a corona discharge spray gun onto several separate panels of 2 mil thick copper foil that are pre-heated to 170°F (77°C) and maintained at this temperature until a smooth continuous molten coating film is formed. Immediately after fusion, while the film was is still molten, the panels are cured by exposure to UV radiation. The cured coatings all have a film thickness of between 2.2-3.0 mils.

The high-temperature coatings of each of Examples 3-7 are each coated over copper foil panels coated with the formulations of Examples 9 and 10. Coating conditions are per examples 3-7. In each case, the copper foils remained intact and undamaged. The continuous, defect-free coatings further evidenced that the essential characteristics of the copper foil remained unchanged by application of the high-temperature coating.

Because the low-temperature coating powder of these examples have a UV cure and can be fused at a very low temperature, these low-temperature coating powders can be used to form a first coating on very heat-sensitive substrates. Thus, coating powders considered "low temperature-curing" for applications, such as coating wood, may have temperature/time fusing and curing conditions too severe for very heat-sensitive substrates, such as certain low melting plastics. In such case, the UV-curable coating powders of these examples may be used to form the inner coating, and a "low-temperature" coating powder which fuses and cures at relatively more severe temperature/time conditions may serve as the higher-temperature second coating.

## Claims

**1.** A method of coating a heat-sensitive substrate comprising:
forming a first coating on said substrate with a first coating powder that forms a cured coating composition under first time/temperature conditions that are not harmful to said substrate, and
forming a second coating over said first coating with a second coating powder which forms a coating under second time/temperature conditions, such that, if said second coating powder were directly applied to said substrate and a cured coating formed therefrom, said second time/temperature condition would be harmful to said substrate, whereby said first coating protects said substrate from harm during coating formation of said second coating powder.

**2.** The method of Claim 1 wherein said first coating powder is characterized by the ability to fuse or fuse and cure in five minutes at a temperature of about 300°F or less.

**3.** The method of Claim 1 wherein said first coating powder is applied to said substrate, fused, and cured and then said second coating powder is applied, fused, and cured.

**4.** The method of Claim 1 wherein said first coating powder is applied to said substrate and fused but not fully cured, said second coating powder is applied, and thermal energy is applied from an external source to fuse and cure said second coating powder and fully cure said first coating powder.

**5.** The method of Claim 4 wherein said first coating powder is UV curable and thermally curable, said first coating powder being applied and fused but not thermally cured; then said fused first coating powder being partially cured by UV radiation; said second coating powder being applied; and then thermal energy being applied to fuse and cure said second coating powder and fully cure said first coating powder.

**6.** The method according to Claim 1 wherein said first coating powder contains a foaming agent in an amount that when said first coating powder is fused said blowing agent expands said first coating.

**7.** The method according to Claim 6 wherein said first coating powder contains sufficient foaming agent to reduce the density of said inner coating by about 25 % relative to the density of a coating produced by the same coating powder formulation without said foaming agent.

**8.** The method according to Claim 1 where said second coating powder produces a wrinkle finish.

**9.** The method according to Claim 1 wherein said second coating powder produces a low-gloss finish.

**10.** The method according to Claim 1 wherein said second coating powder contain metal flakes so as to produce a member selected from the group consisting of metallic, mirror-like or metallic and mirror-like finishes upon curing of said second coating powder.

**11.** The method according to Claim 1 wherein said second coating powder contains glass flakes so as to produce a decorative finish.

**12.** A heat sensitive substrate coated by the method of Claim 1.

**13.** A coated, heat-sensitive substrate, comprising:
a heat sensitive substrate that retains substantially the same character following coating as were present prior to coating; a first powder coated layer on said substrate comprising a cured composition that was cured under time/temperature conditions that is not essentially damaging to the character of said heat-sensitive substrate; and a second powder coated layer having been applied over said first powder coating layer comprising a cured composition that was cured under time/temperature condition that, but for the presence of said first coated layer, would have essentially damaged detrimental to the character said heat-sensitive substrate.

**14.** The coated heat-sensitive substrate of Claim 13 wherein said substrate is a lignocellulosic substrate.

**15.** The coated heat-sensitive substrate of Claim 13 wherein said substrate is wood.

**16.** The coated heat-sensitive substrate of Claim 13 wherein said substrate is fiberboard.

**17.** The coated heat-sensitive substrate of Claim 13 wherein said substrate is glass.

**18.** The coated heat-sensitive substrate of Claim 13 wherein said substrate is ceramic.

**19.** The coated heat-sensitive substrate of Claim 13 wherein said substrate is paper.

**20.** The coated heat-sensitive substrate of Claim 13 wherein said substrate is particle board.

**21.** The coated heat-sensitive substrate of Claim 13 wherein said substrate is a thin metal foil.

**22.** The coated heat-sensitive substrate of Claim 13 wherein said first powder coated layer is formed from a one-component epoxy resin- based coating powder.

**23.** The coated heat-sensitive substrate of Claim 13 wherein said first powder coated layer is formed from a two-component epoxy resin-based coating powder.

**24.** The coated heat-sensitive substrate of Claim 13 wherein said first powder coated layer is formed from a coating powder which fuses at a low temperature and has a UV cure mechanism.

**25.** The coated heat-sensitive substrate of Claim 13 wherein said first powder coated layer is formed from a coating powder which fuses at a low temperature and has both a thermal cure mechanism and a UV cure mechanism.

**26.** The coated heat-sensitive substrate of Claim 13 wherein said second powder coated layer provides a metallic appearance.

**27.** The coated heat-sensitive substrate of Claim 13 wherein said second powder coated layer provides a mirror-like appearance.

**28.** The coated heat-sensitive substrate of Claim 13 wherein said second powder coated layer provides a sparkled or glittered appearance.

**29.** The coated heat-sensitive substrate of Claim 13 wherein said second powder coated layer provides a textured appearance.

**31.** The coated heat-sensitive substrate of Claim 13 wherein said second powder coated layer provides a wrinkled appearance.

**32.** The coated heat-sensitive substrate of Claim 31 wherein said second powder coated layer is formed from an epoxy resin-based coating powder.

**33.** The coated heat-sensitive substrate of Claim 13 wherein said second powder coated layer is formed from a polyester-based coating powder.

**34.** The coated heat-sensitive substrate of Claim 13 wherein said second powder coated layer is formed from a silicone-containing coating powder, whereby said second powder coated layer is flame-retardant.

**35.** The coated heat-sensitive substrate of Claim 13 wherein said substrate is a engineered wood.
